# EUROPÄISCHE PATENTSCHRIFT

(11) **EP 2 958 383 B1**
(45) Veröffentlichungstag und Bekanntmachung des Hinweises auf die Patenterteilung: **07.12.2016**
(21) Anmeldenummer: 15175132.8
(22) Anmeldetag: 31.10.2012
(51) Int. Cl.: H04W 60/00, H04W 36/00

(54) **OPTIMIERUNG VON FUNKNETZWECHSELN AUFGRUND EINES CS FALLBACK-MECHANISMUS**
OPTIMIZATION OF NETWORK CHANGEOVER DUE TO A CS FALLBACK MECHANISM
OPTIMISATION D'UN CHANGEMENT DE RÉSEAU À CAUSE D'UNE PROCÉDURE DE RECHANGE À COMMUTATION PAR CIRCUIT

(30) Priorität: 04.11.2011 DE 102011085785
(43) Veröffentlichungstag der Anmeldung: 23.12.2015
(62) Teilanmeldung aus: 12190702.6
(73) Patentinhaber: Vodafone Holding GmbH, 40213 Düsseldorf (DE)
(72) Erfinder: Kulakov, Alexej, 40595 Düsseldorf (DE); Wild, Peter, 47807 Krefeld (DE); Lu, Yang, 40489 Düsseldorf (DE); Caldenhoven, Jürgen, 40547 Düsseldorf (DE)
(74) Vertreter: Jostarndt Patentanwalts-AG

(56) Entgegenhaltungen:
- "3rd Generation Partnership Project; Technical Specification Group Services and System Aspects; Circuit Switched Fallback in Evolved Packet System; Stage 2 (Release 8)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V8.0.0, 9. Juni 2008 (2008-06-09), Seiten 1-41, XP050363516,
- "3rd Generation Partnership Project; Technical Specification Group Services and System Aspects; Telecommunication management; Performance Management (PM); Performance measurements - GSM (Release 10)", 3GPP STANDARD; 3GPP TS 52.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. V10.0.0, 6. April 2011 (2011-04-06), Seiten 1-223, XP050477238,
- "3rd Generation Partnership Project; Technical Specification Group Services and System Aspects; Telecommunication management; Performance Management (PM); Performance measurements Evolved Universal Terrestrial Radio Access Network (E-UTRAN) (Release 10)", 3GPP STANDARD; 3GPP TS 32.425, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. SA WG5, Nr. V10.5.0, 17. Juni 2011 (2011-06-17), Seiten 1-65, XP050553251,

## Beschreibung

Die Erfindung befasst sich mit dem Wechsel von Mobilfunkendgeräten von einem ersten Funknetz eines Mobilfunksystems in ein zweites Funknetz im Rahmen eines CS Fallback-Mechanismus. Die Erfindung betrifft insbesondere ein Verfahren zur Durchführung eines solchen Wechsels eines Mobilfunkendgeräts, eine zur Durchführung des Wechsels verwendbare Basisstationseinrichtung eines Funknetzes sowie ein zur Durchführung des Wechsels verwendbares Mobilfunkendgerät.

Unter der Bezeichnung 4G- oder LTE (Long-Term Evolution) sind Mobilfunknetze der nächsten Generation bekannt, die vom 3GPP (3rd Generation Partnership Project) standardisiert werden. Bei der Entwicklung dieser Netze steht die Übertragung von Daten vor der Durchführung von Sprachanrufen im Vordergrund. Im Gegensatz zu den Mobilfunknetzen vorangegangener Generation sollen in 4G-Netzen paketvermittelte (PS) Verbindungen zwischen den Netzen und den angebundenen Mobilfunkendgeräten verwendet werden. Leitungsvermittelte Verbindungen, wie sie insbesondere in 2G-Netzen nach dem GSM (Global System for Mobile Communications)-Standard und in 3G-Netzen nach dem UMTS (Universal Telecommunications)-Standard vor allem für die Sprachkommunikation vorgesehen waren, sind nicht vorgesehen. Die Durchführung von Sprachanrufen soll von den 4G-Netzen über paketvermittelte Verbindung als ein Dienst nutzbar sein, der von dem so genannten IMS (IP Multimedia Subsystem) der 4G-Netze bereitgestellt wird.

Insbesondere in der Anfangsphase des Betriebs von 4G-Netzen stehen die Dienste des IMS voraussichtlich nur eingeschränkt oder gar nicht zur Verfügung.

Um Mobilfunknutzern dennoch die Möglichkeit zur Durchführung von Sprachanrufen zu bieten, ist ein so genannter Circuit Switched (CS) Fallback Mechanismus vorgesehen, der in dem 3GPP-Dokument TS 23.272 beschrieben wird. Hierbei wechselt ein Mobilfunkendgerät zur Durchführung eines Sprachanrufs, der über eine leitungsvermittelte Verbindung ausgeführt wird, von dem 4G-Netz in einem festgelegten Ablauf in ein das 4G-Netz räumlich überlagerndes 2G- oder 3G-Netz (bzw. die CS-Domäne eines solchen Netzes). Der Netzwechsel erfolgt von dem 4G-Funknetz in das 2G- oder 3G-Funknetz und nach dem Wechsel des Funknetzes werden insbesondere die leitungsvermittelt arbeitenden Kernnetzkomponenten des 2G- oder 3G-Netzes genutzt.

Bei einem ausgehenden (mobile originated - MO) Anruf informiert das Mobilfunkendgerät zunächst das 4G-Netz, dass es einen Sprachanruf mittels CS Fallback ausführen möchte. Nach einer darauf ergehenden Aufforderung des 4G-Netzes wechselt das Endgerät in einem selbst ausgewählte oder von dem 4G-Netz vorgegeben Zelle eines 2G- oder 3G-Netzes, in dem sich das Endgerät zunächst anmeldet. Dann wird der Sprachanruf aufgebaut. Bei einem eingehenden (mobile terminated - MT) Anruf wird das Endgerät zunächst für das 4G-Netz über den Anruf informiert. Nach Rückmeldung und einer entsprechenden Aufforderung des 4G-Netzes wechselt das Endgerät dann in eine von dem 4G-Netz vorgegebene oder selbst ausgewählte Zelle eines 2G- oder 3G-Netzes. Nach der Anmeldung in diesem Netz signalisiert das Endgerät seine Verfügbarkeit zur Annahme des Anrufs. Sodann wird der Anruf leitungsvermittelt in dem 2G- oder 3G-Netz aufgebaut. Der Netzwechsel erfolgt von dem 4G-Funknetz in das 2G- oder 3G-Funknetz und nach dem Wechsel des Funknetzes werden insbesondere die leitungsvermittelt arbeitenden Kernnetzkomponenten des 2G- oder 3G-Netzes genutzt.

Gegenwärtig besteht bei der Implementierung des CS Callback-Mechanismen das Problem, dass die Basisstation des Funknetzes, über das die leitungsvermittelte Verbindung aufgebaut wird - insbesondere die Basisstation des 2G- oder 3G-Netzes - keine Kenntnis darüber erhält, dass der Zugriff eines Endgeräts aufgrund eines Wechsels des Funknetzes im Rahmen des CS Fallback-Mechanismus vorgenommen wird. Hierdurch ist es beispielsweise nicht möglich eine Fehlerquote von Funknetzwechseln im Rahmen eines CS Fallback Mechanismus zu ermitteln und bei einer hohen Fehlerquote geeignete Maßnahmen zu deren Verringerung vorzunehmen.

Es ist daher eine Aufgabe der vorliegenden Erfindung, in einer Basisstation eine Erkennung von Zugriffen von Mobilfunkendgerät zu ermöglichen, die aufgrund eines Funknetzwechsels erfolgen, der im Rahmen eines CS Fallback-Mechanismus durchgeführt wird.

Die Aufgabe wird gelöst durch ein Verfahren nach dem Patentanspruch 1. Ausgestaltungen des Verfahrens sind in den abhängigen Ansprüchen angegeben.

Gemäß einem ersten Aspekt schlägt die Erfindung ein Verfahren zum Wechsel eines Mobilfunkendgeräts von einem ersten Funknetz eines Mobilfunksystems in ein zweites Funknetz vor. Der Wechsel wird aufgrund eines CS Fallback-Mechanismus durchgeführt und das Mobilfunkendgerät meldet sich aufgrund des Wechsels an einer Basisstationseinrichtung des zweiten Funknetzes an, um eine Verbindung aufzubauen. Das Verfahren zeichnet sich dadurch aus, dass das Mobilfunkendgerät im Zusammenhang mit der Anmeldung einen Hinweis auf den CS-Fallback-Mechanismus an die Basisstationseinrichtung übermittelt und die Basisstationseinrichtung den Zugriff des Endgeräts in Abhängigkeit von dem Hinweis registriert.

Es wird zudem eine Basisstationseinrichtung zur Verwendung in einem zweiten Funknetz eines Mobilfunksystems beschrieben. An der Basisstationseinrichtung sind Mobilfunkendgeräte anmeldbar, um eine Verbindung aufzubauen. Die Basisstationseinrichtung ist dazu ausgestaltet, einen von einem Mobilfunkendgerät im Zusammenhang mit der Anmeldung gesendeten Hinweis zu empfangen und die Anmeldung des Mobilfunkendgeräts in Abhängigkeit von dem empfangenen Hinweis zu registrieren, wobei der Hinweis darüber informiert, dass die Anmeldung des Mobilfunkendgeräts aufgrund eines Wechsels von einem ersten Funknetz des Mobilfunksystems in das zweite Funknetz im Rahmen eines CS-Fallback-Mechanismus erfolgt.

Ferner wird ein Mobilfunkendgerät zur Verwendung in einem Mobilfunksystem beschrieben. Das Mobilfunkendgerät ist dazu ausgestaltet, aufgrund eines CS Fallback-Mechanismus einen Wechsel von einem ersten Funknetz des Mobilfunksystems in ein zweites Funknetz des Mobilfunksystems durchzuführen und sich aufgrund des Wechsels an einer Basisstationseinrichtung des zweiten Funknetzes anzumelden, um eine Verbindung aufzubauen. Zudem ist das Mobilfunkendgerät dazu ausgestaltet, im Zusammenhang mit der Anmeldung einen in der Basisstationseinrichtung registrierbaren Hinweis auf den CS-Fallback-Mechanismus an die Basisstationseinrichtung übermittelt.

Kenntnis darüber, dass Die Anmeldung eines Mobilfunkendgeräts aufgrund eines Funknetzwechsels im Rahmen eines CS Fallback-Mechanismus erfolgt, erhält eine Basisstationseinrichtung anhand eines Hinweises, den das Endgerät an die Basisstationseinrichtung übermittelt. Der Hinweis ist in der Basisstationseinrichtung vorzugsweise registrierbar, d.h. kann von der Basisstationseinrichtung erkannt und interpretiert werden. In Abhängigkeit von dem empfangenen Hinweis erfolgt in der Basisstationseinrichtung eine Registrierung der Anmeldung des Endgeräts. Hierbei kann die Anmeldung als eine solche registriert werden, die im Rahmen eines CS Fallback-Mechanismus erfolgt. Hierdurch kann die Anmeldung des Endgeräts innerhalb des Funknetzes des Mobilfunksystems und insbesondere in Bezug auf die Basisstationseinrichtung des zweiten Funknetzes, bei der die Anmeldung erfolgt, registriert werden. Dies erlaubt eine Auswertung von Anmeldungsversuchen in Bezug auf einzelne Einheiten des Funknetzes, die beispielsweise für eine gezielte Optimierungen des CS Fallback-Mechanismus innerhalb des Funknetzes herangezogen werden kann.

Bei der Verbindung, deren Aufbau das Endgerät mit der Anmeldung an der Basisstationseinrichtung des zweiten Funknetzes bezweckt handelt es sich vorzugsweise um eine leitungsvermittelte Verbindung, über die das Endgerät auf einen von dem Mobilfunknetz bereitgestellten Dienst, wie etwa einen Dienst für Sprachanrufe, zugreift. Insbesondere kann über die Verbindung ein von dem Endgerät abgehender oder bei dem Endgerät eingehender Anruf aufgebaut werden.

Eine Ausgestaltung der Erfindung sieht vor, dass geprüft wird, ob die Anmeldung des Endgeräts an der Basisstationseinrichtung des zweiten Funknetzes erfolgreich ist, und die Registrierung der Anmeldung des Endgeräts zusammen mit einem Erfolgsindikator vorgenommen wird, der in Abhängigkeit mit von einem Ergebnis der Prüfung bestimmt wird. Hierdurch kann ein erkannter Zugriff eines Endgeräts im Rahmen des CS Fallback-Mechanismus als erfolgreich oder fehlgeschlagen in der Basisstationseinrichtung registriert werden. Dies erlaubt es beispielsweise, Fehlerquoten für Zugriffe im Rahmen des CS Fallback-Mechanismus zu bestimmen. Die Prüfung, ob der Zugriff erfolgreich ist, d.h. ob das Endgerät erfolgreich an der Basisstationseinrichtung angemeldet werden kann, wird vorzugsweise in der Basisstationseinrichtung des zweiten Funknetzes durchgeführt. Eine erfolgreiche Anmeldung wird vorzugsweise dann festgestellt, wenn infolge der Anmeldung ein Rufaufbau über die Verbindung zu dem Endgerät erfolgt ist. Gleichfalls kann bereits ein erfolgreicher Aufbau einer Signalisierungsverbindung als eine erfolgreiche Anmeldung gewertet werden. Der Aufbau der Signalisierungsverbindung geht dem Rufaufbau voraus. Insbesondere werden über die Signalisierungsverbindung Signalisierungsnachrichten zum Rufaufbau mit dem Endgerät ausgetauscht.

In einer weiteren Ausgestaltung der Erfindung ist vorgesehen, dass das Endgerät von einer Basisstationseinrichtung des ersten Funknetzes zur Durchführung des Wechsels aufgefordert wird und die Basisstationseinrichtung aufgrund der Aufforderung einen im Rahmen des CS Fallback-Mechanismus durchgeführten Wechselversuch registriert. Hierdurch können mittels der Ausgangs-Basisstationseinrichtung des ersten Funknetzes auch solche Funknetzwechselversuche erfasst werden, die bereits fehlschlagen, bevor sich das Endgerät mit der Anmeldung an einer Basisstationseinrichtung des zweiten Funknetzes beginnen kann. Informationen über derartige Wechselversuche können beispielsweise ebenfalls zur Ermittlung einer Fehlerquote von Funknetzwechseln im Rahmen des CS Fallback-Mechanismus herangezogen werden.

Vorzugsweise werden in der Basisstationseinrichtung des zweiten Funknetzes die Anmeldung des Endgeräts und/oder in der Basisstationseinrichtung des zweiten Funknetzes der Wechselversuch in Bezug auf eine bestimmte von der Basisstationseinrichtung des zweiten Funknetzes versorgte Funkzelle des zweiten Funknetzes registriert werden. Dies ermöglicht beispielsweise die Ermittlung von funkzellenspezifischen Erfolgsstatistiken von Funknetzwechseln im Rahmen des CS Fallback-Mechanismus. Derartige Statistiken können etwa zur Optimierung der Auswahl von Zielzelle für zukünftige Funknetzwechsel im Rahmen des CS Fallback-Mechanismus berücksichtigt werden. Somit kann eine Optimierung des CS Fallback-Mechanismus in dieser Ausgestaltung auf Funkzellenniveau ausgeführt werden.

In einem Optimierungsschritt wird wenigstens ein Netzparameter des ersten und/oder des zweiten Funknetzes in Abhängigkeit von den in der Basisstationseinrichtung des ersten und/oder des zweiten Funknetzes für eine Mehrzahl von Funknetzwechseln registrierten Informationen über Funknetzwechsel im Rahmen des CS Fallback-Mechanismus angepasst. Bei diesen Informationen handelt es sich um die in der Basisstationseinrichtung des ersten Funknetzes registrierten Zugriffe im Rahmen des CS Fallback-Mechanismus und die in der zweiten Basisstationseinrichtung registrierten Zugriffsversuche. Bei dem Netzparameter kann es sich um einen Parameter handeln, der die Auswahl der Zielzelle für den Funknetzwechsel in das zweite Funknetz beeinflusst.

Anhand von in der Basisstationseinrichtung des zweiten Funknetzes registrierter Anmeldungen und zugehörigen Erfolgsindikatoren und anhand in der Basisstationseinrichtung des ersten Funknetzes registrierter Wechselversuche wird eine Fehlerquote ermittelt, nach deren Maßgabe wenigstens der Netzparameter in dem Optimierungsschritt angepasst wird. Für eine Anpassung eines die Zielzellenauswahl beeinflussenden Parameters können beispielsweise funkzellenspezifische Fehlerquoten ermittelt werden.

In einer Ausführungsform der Erfindung ist vorgesehen, dass Informationen über die in der Basisstationseinrichtung des zweiten Funknetzes registrierten Anmeldungen und/oder die zugehörigen Erfolgsindikatoren von der Basisstationseinrichtung des zweiten Funknetzes an die Basisstationseinrichtung des ersten Funknetzes übermittelt werden und dass der Optimierungsschritt in der Basisstationseinrichtung des ersten Funknetzes ausgeführt wird. Eine weitere Ausführungsform sieht vor, dass Informationen über die in der Basisstationseinrichtung des zweiten Funknetzes registrierten Anmeldungen und/oder die zugehörigen Erfolgsindikatoren von der Basisstationseinrichtung an eine Wartungseinheit des Mobilfunksystems übermittelt werden und wobei der Optimierungsschritt in der Wartungseinheit ausgeführt wird. Hierbei werden auch Informationen über die in der Basisstationseinrichtung des ersten Funknetzes registrierten Wechselversuche an die Wartungseinheit übermittelt.

Darüber hinaus zeichnet sich eine Ausgestaltung der Erfindung dadurch aus, dass der Hinweis auf den CS Fallback-Mechanismus innerhalb einer Anforderung für den Aufbau einer Signalisierungsverbindung von dem Mobilfunkendgerät an die Basisstationseinrichtung des zweiten Funknetzes übermittelt wird. Wie zuvor bereits erwähnt geht der Aufbau der Signalisierungsverbindung dem Rufaufbau voraus. Die Ausgestaltung weist damit den Vorteil auf, dass die Registrierung der Anmeldung als eine Anmeldung im Rahmen des CS Fallback-Mechanismus bereits in einem besonders frühen Stadium des zu dem Rufaufbau führenden Anmeldungsvorgangs erfolgt.

Bei dem ersten Funknetz kann es sich um ein 4G-Netz handeln, wie es eingangs erwähnt wurde. Das zweite Funknetz kann ein 2G- und/oder 3G-Netz sein. Die Erfindung ist jedoch weder auf diese Netze noch auf den für diese Netze vorgesehenen CS Fallback-Mechanismus beschränkt. Vielmehr ist die Erfindung auch bei anderen CS Fallback-Mechanismen einsetzbar, bei denen ein Mobilfunkendgerät von einem ersten in ein zweites Funknetz wechselt, damit in dem zweiten Funknetz eine leitungsvermittelte Verbindung zu dem Endgerät aufgebaut wird.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Mobilfunksystems mit einem ersten und mehreren zweiten Funknetzen, in denen ein CS Fallback-Mechanismus eingerichtet ist,
- Fig. 2: eine schematisches Ablaufdiagram für die Durchführung des CS Fallback für einen abgehenden Anruf und
- Fig. 3: eine schematisches Ablaufdiagramm für die Durchführung des CS Fallback für einen eingehenden Anruf.

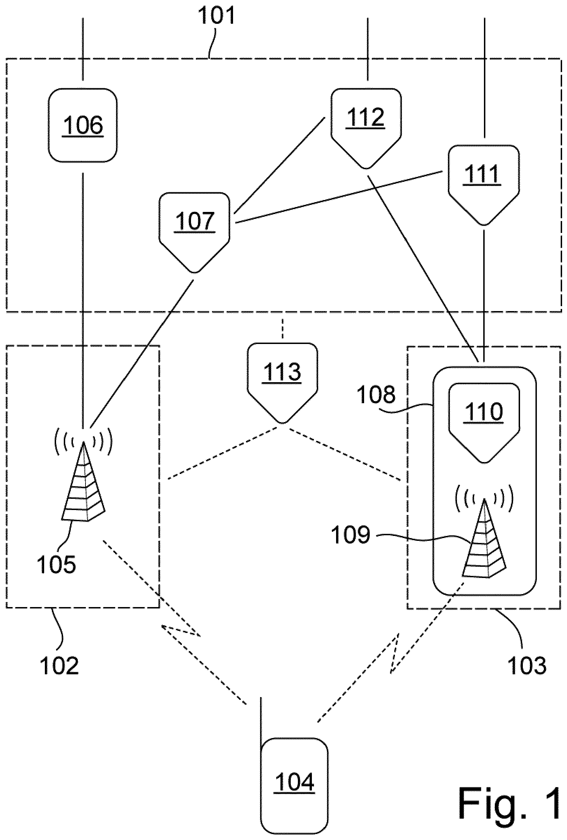

Das schematisch in der Figur 1 gezeigte Mobilfunksystem umfasst ein Kernnetz 101 sowie mehrere mit dem Kernnetz 101 verbundene zellulare Funknetze 102 und 103, über die Mobilfunkendgeräte 104 drahtlos mit dem Kernnetz 101 verbunden werden können. Bei den Mobilfunkendgeräten 104, von denen in der Figur 1 beispielhaft ein einziges dargestellt ist, kann es sich um mobile Endgeräte, wie beispielsweise Mobiltelefone, Smartphones, Notebook-Computer oder dergleichen, handeln. Gleichfalls kann es sich um stationäre Endgeräte handeln, die über ein Mobilfunkmodem verfügen, wie etwa entsprechend eingerichtete PCs (Personal Computers).

Ein erstes Funknetz 102, das im Folgenden auch als NG-Funknetz (für "Next Generation"-Funknetz) bezeichnet wird, stellt eine erste Funkzugangstechnologie (Radio Access Technology - RAT) bereit. Das NG-Funknetz 102 umfasst eine Vielzahl von Zellen, die jeweils von einer Basisstationseinrichtung 105 versorgt werden, die den Funkzugangspunkt für die entsprechende Funkzelle bildet. In der Figur 1 ist von den Basisstationseinrichtungen 105 des NG-Funknetzes 102, die im Folgenden auch als NG-Basisstationseinrichtungen bezeichnet werden, beispielhaft eine einzige dargestellt. In einer Ausführungsform ist das NG-Funknetz 102 als E-UTRAN (Evolved UMTS Terrestrial Radio Access Network) nach dem LTE-Standard ausgestaltet. In diesem Fall handelt es sich bei den NG-Basisstationseinrichtungen 105 um eNodeBs gemäß dem LTE-Standard.

Im Kernnetz 101 sind dem NG-Funknetz 102 die Komponenten 106, 107, zugeordnet. Die Komponente 106 ist eine Gatewayeinheit, die im Folgenden auch als NG-Gatewayeinheit bezeichnet wird und für das Weiterleiten und das Routing von Daten zuständig ist, die innerhalb der über das NG-Funknetz 102 hergestellten Verbindungen übertragen werden. Hierbei handelt es sich ausschließlich um paketvermittelte Verbindungen. Mittels solcher Verbindungen können Datenpakete über das NG-Funknetz 102 und die NG-Gatewayeinheit 106 zwischen Endgeräten 104 und weiteren Netzen und Systemen ausgetauscht werden, die mit der Gatewayeinheit 106 verbunden sind. Insbesondere lassen sich über die Gatewayeinheit 106 und ggf. weitere angeschlossene Systeme paketvermittelte Datenverbindung in andere Datennetze wie das Internet aufbauen. Bei der NG-Gatewayeinheit 106 handelt es sich in einer Implementierung um einen S-GW (Serving Gateway) nach dem LTE-Standard.

Zur Verwaltung und Steuerung des Aufbaus, der Aufrechterhaltung und des Abbaus von Funkverbindungen über das NG-Funknetz 102 umfasst das Kernnetz 101 die Steuerungseinheit 107, die insbesondere für die Durchführung von Aufgaben vorgesehen ist, welche die Mobilitätsverwaltung von an das NG-Funknetz 102 angebundenen Endgeräten 104 (d.h. von Endgeräten 104 mit aktiver Datenverbindung und von angemeldeten Endgeräten 104 ohne aktive Datenverbindung) betreffen. Bei der Steuerungseinheit 107 kann es sich insbesondere um eine MME (Mobility Management Entity) nach dem LTE-Standard handeln.

Neben dem NG-Funknetz 102 beinhaltet das Mobilfunksystem wenigstens ein weiteres Funknetz 103, das eine weitere Funkzugangstechnologie bereitstellt und im Folgenden als L-Funknetz (für "Legacy"-Funknetz) bezeichnet wird. Obwohl in der Figur 1 nur ein einziges L-Funknetz 103 dargestellt ist, ist das Mobilfunksystem hierauf nicht beschränkt. Vielmehr können auch mehrere L-Funknetze 103 vorgesehen sein, die mit dem Kernnetz 101 verbunden sind.

Das L-Funknetz 103 umfasst gleichfalls eine Vielzahl von Funkzellen, die von jeweils einer Basisstationseinrichtung 108 versorgt werden, welche als Funkzugangspunkt der betreffenden Funkzelle dient. Von den Basisstationseinrichtungen 108 des L-Funknetzes 103, die im Folgenden auch als L-Basisstationseinrichtungen 108 bezeichnet werden, ist in der Figur 1 gleichfalls beispielhaft eine einzige dargestellt. Wie in der Figur 101 gezeigt, können die L-Basisstationseinrichtungen 108 eine Funkeinheit 109 umfassen, welche als eigentlichen Funkzugangspunkt dient, und eine zugeordnete Funknetz-Steuerungseinheit 110, die zur Steuerung einer oder mehrerer Funkeinheiten 109 dient. Gleichfalls können die L-Basisstationseinrichtungen 108 ähnlich wie die NG-Basisstationseinrichtungen 105 auch durch eine einzige Einheit gebildet werden (und die NG-Basisstationseinrichtungen 105 können mehrere Untereinheiten umfassen).

In einer Ausführungsform ist das das L-Funknetz 103 als ein UTRAN (UMTS Terrestrial Radio Access Network) nach dem UMTS-Standard ausgestaltet. In diesem Fall entspricht eine L-Basisstationseinrichtung 108 einem RNS (Radio Network System) mit einer als NodeB ausgestalteten Funkeinheit 109 und einer als RNC (Radio Network Controller) ausgestalteten Funknetz-Steuerungseinheit 110. Gleichfalls kann das L-Funknetz 103 auch als ein GERAN (GSM EDGE Radio Access Network) nach dem GSM-Standard ausgebildet sein. In diesem Fall entspricht eine L-Basisstationseinrichtung 108 einem BSS (Base Station Subsystem) mit einer als BTS (Base Transceiver Station) ausgebildeten Funkeinheit 109 und einer als BSC (Base Station Controller) ausgestalteten Funknetz-Steuerungseinheit 110. Beispielsweise kann das Mobilfunknetz sowohl ein UTRAN als auch ein GERAN umfassen. In einer Ausführungsform mit mehreren L-Funknetzen 103 kann sowohl ein UTRAN als auch ein GERAN vorhanden sein, die mit denselben im Folgenden beschriebenen Komponenten des Kernnetzes 101 verbunden sein können. Alternativ oder zusätzlich zu einem UTRAN und/oder einem GERAN können eine oder mehrere andere L-Funknetze 103 vorgesehen sein.

Über das L-Funknetz 103 können leitungsvermittelte Verbindungen aufgebaut werden, die insbesondere zur Durchführung von Sprachanrufen benutzt werden können. Für die Herstellung von leitungsvermittelten Verbindungen ist dem L-Funknetz 103 im Kernnetz 101 eine Vermittlungseinheit 111 zugeordnet, die insbesondere als eine MSC (Mobile Switching Centre) ausgestaltet sein kann. Die Vermittlungseinheit 111 steuert den Aufbau, die Aufrechterhaltung und den Abbau von leitungsvermittelten Verbindungen zu Endgeräten 104, die mit dem L-Funknetz 103 verbunden sind. Vorzugsweise ist es zudem möglich, paketvermittelte Datenverbindungen über das L-Funknetz 103 aufzubauen. Zur Steuerung des Aufbaus, der Aufrechterhaltung und des Abbaus von paketvermittelten Datenverbindungen sowie für das Routing und die Weiterleitung von Datenpaketen, die innerhalb der paketvermittelten Verbindungen übertragen werden, ist dem L-Funknetz 103 die Gatewayeinheit 112 zugeordnet, die insbesondere als ein SGSN (Serving GPRS Support Node) ausgestaltet sein kann und hierin auch als L-Gatewayeinheit bezeichnet wird.

Zur Wartung des Mobilfunksystems einschließlich des NG-Funknetzes 102 und des L-Funknetzes 103 kann eine Wartungseinheit 113 vorgesehen sein. Diese kann insbesondere Netzparameter, die in Komponenten des Kernnetzes 101 und der Funknetzes 102, 103 hinterlegt sind und das Verhalten der Komponenten bestimmen, anpassen. Hierzu kann vorgesehen sein, dass von Komponenten des Kernnetzes 101 und der Funknetze Informationen, insbesondere erfasste Messdaten, an die Wartungseinheit 113 übermittelt werden. In der Wartungseinheit 113 werden die erhalten Informationen ausgewertet, und in Abhängigkeit von den Ergebnissen der Auswertung erfolgt eine Anpassung der Netzparameter. Die Auswertung sowie die Anpassung können automatisch mittels hinterlegter Algorithmen durchgeführt und/oder aufgrund von manuellen Eingaben eines Bedieners vorgenommen werden.

In dem Mobilfunksystem ist vorgesehen, dass ein Endgerät 104, das eine Verbindung über das NG-Funknetz 102 aufgebaut hat oder in dem NG-Funknetz 102 ohne aktive Verbindung registriert ist, für den Aufbau eines Sprachanrufs oder für die Nutzung weiterer vorgegebener Dienste, die über eine leitungsvermittelte Verbindung Dienste bereitgestellt werden können, in das L-Funknetz 103 wechselt. Nach dem Wechsel wird über das L-Funknetz 103 und die diesem im Kernnetz 101 zugeordnete Vermittlungseinheit 111 eine leitungsvermittelte Verbindung zu dem Endgerät 104 aufgebaut, über die der Sprachanruf zu dem Endgerät 104 aufgebaut oder der Dienst bereitgestellt wird. Optional kann nach dem Wechsel in das L-Funknetz 103 auch eine Datenverbindung zu dem Endgerät 104 über die L-Gatewayeinheit 112 aufgebaut werden bzw. eine zuvor über das NG-Funknetz 102 und die diesem zugeordnete L-Gatewayeinheit 112 geführte Datenverbindung auf das L-Funknetz 103 und die L-Gatewayeinheit 112 umgeschaltet werden.

Der Wechsel des Endgeräts 104 in das L-Funknetz 103 erfolgt im Rahmen eines CS Fallback-Mechanismus. Eine Veranlassung zur Einrichtung des CS Fallback-Mechanismus in dem Mobilfunksystem kann dadurch gegeben sein, dass das NG-Funknetz 102 und die zugeordneten Komponenten des Kernnetzes 101 keine Ausführung von Sprachanrufen zulassen. Dies ist etwa der Fall, wenn das Kernnetz 101 nicht über ein mit der NG-Gatewayeinheit 106 gekoppeltes IMS verfügt, welches insbesondere Dienste zur Durchführung von Sprachen bereitstellt. Gleichfalls kann auch bei vorhandener Infrastruktur zur Bereitstellung von Diensten für Sprachanrufe über das NG-Funknetz 102, insbesondere bei vorhandenem IMS, gewünscht sein, dass zu vorgegebenen Zeiten und/oder von ausgewählten Endgeräten 104 ein CS Fallback mit einem Wechsel in das L-Funknetz 103 vorgenommen wird, um Sprachverbindungen herzustellen oder andere vorgegebene leitungsvermittelte Dienste zu nutzen.

Der Wechsel von dem NG-Funknetz 102 in das L-Funknetz 103 erfolgt sowohl bei abgehenden (MO) als auch bei eingehenden (MT) Anrufen aufgrund einer Mitteilung, die von der NG-Basisstationseinrichtung 105 an das Endgerät 104 gesendet wird und dieses zur Durchführung des Wechsels veranlasst. Die Funkzelle des L-Funknetzes 103, in welche das Endgerät 104 daraufhin wechselt, kann in verschiedenen Implementierungen zuvor von der NG-Basisstationseinrichtung 105 oder von dem Endgerät 104 selbst ausgewählt werden. Die durch Aufforderung zur Durchführung des Wechsels in das L-Funknetz 103 initiierten Versuche von Endgeräten 104, im Rahmen des CS Fallback-Mechanismus in das L-Funknetz 103 zu wechseln, werden vorzugsweise von der NG-Basisstationseinrichtung 105 registriert. Sofern eine Vorgabe der Zielfunkzelle (im Folgenden auch kurz als Zielzelle bezeichnet) des L-Funknetzes 103 durch die NG-Basisstationseinrichtung 105 vorgesehen ist, erfolgt die Registrierung vorzugsweise in Zuordnung zu der Zielzelle.

Nach dem Verlassen des NG-Funknetzes 102 verbindet sich das Endgerät 104 mit dem L-Funknetz 103 und meldet sich bei einer L-Basisstationseinrichtung 108 an. Während des Anmeldevorgangs, bei dem zunächst insbesondere eine Signalisierungsverbindung zwischen der L-Basisstationseinrichtung 108 und dem Endgerät 104 aufgebaut wird, oder nach dem Aufbau der Signalisierungsverbindung informiert das Endgerät 104 die L-Basisstationseinrichtung 108 darüber, dass es einen Wechsel im Rahmen des CS Fallback-Mechanismus durchführt. Vorzugsweise wird die Information beim Aufbau der Signalisierungsverbindung gesendet, so dass sie frühzeitig in der L-Basisstationseinrichtung 108 vorliegt. Aufgrund dieser Information registriert die L-Basisstationseinrichtung 108 die Anmeldung des Endgeräts 104 als eine Anmeldung aufgrund des CS Fallback-Mechanismus. Bei einer L-Basisstationseinrichtung mit dem zuvor beschriebenen Aufbau erfolgt die Registrierung vorzugsweise in der Funknetz-Steuerungseinheit 110.

Die L-Basisstationseinrichtung 108 kann der Registrierung einen Erfolgsindikator hinzufügen, der angibt, ob das Endgerät 104 erfolgreich in dem L-Funknetz 103 angemeldet werden konnte oder ob die Anmeldung des Endgeräts 104 auf das L-Funknetz 103 fehlgeschlagen ist. Eine erfolgreiche Anmeldung wird vorzugsweise dann registriert, wenn ein eingehender oder abgehender Anruf über die hergestellte leitungsvermittelte Verbindung zu dem Endgerät aufgebaut werden konnte. Der Erfolgsindikator des Erfolgsfalls kennzeichnet somit den erfolgreichen Rufaufbau. Der Erfolgsindikator des Fehlerfalls kennzeichnet in dieser Ausgestaltung die Fälle, in denen eine Kommunikation zwischen einem Endgerät 104 und der L-Basisstationseinrichtung 108 zur Anmeldung des Endgeräts 104 stattgefunden hat, der Anmeldevorgang jedoch nicht mit einem Rufaufbau abgeschlossen werden konnte. Die Prüfung, ob die Anmeldung erfolgreich ist, wird in der L-Basisstationseinrichtung 108 vorgenommen.

In alternativen Ausgestaltungen können auch andere Kriterien herangezogen werden, nach denen eine erfolgreiche Anmeldung festgestellt wird. Beispielsweise kann bereits der Aufbau einer Signalisierungsverbindung zwischen der L-Basisstationseinrichtung 108 und dem Endgerät 104 als eine erfolgreiche Anmeldung angesehen werden. Sofern bei dem Funknetzwechsel ein Handover einer paketvermittelten Verbindung des Endgeräts 104 in das L-Funknetz vorgesehen ist, wie weiter unten noch erläutert wird, kann auch vorgesehen sein, dass der Erfolgsfall nur dann festgestellt wird, wenn der Anruf erfolgreich aufgebaut und der Handover erfolgreich durchgeführt wird.

Informationen über die registrierten Zugriffe auf die L-Basisstationseinrichtung 108, die aufgrund des CS Fallback-Mechanismus stattgefunden haben, sowie die zugehörigen Erfolgsindikatoren werden von der L-Basisstationseinrichtung 108 an die NG-Basisstationseinrichtung 105 und/oder an die Wartungseinheit 113 übertragen. Alternativ kann die L-Basisstationseinrichtung 108 auch lediglich Informationen über die erfolgreich durchgeführt Wechsel aufgrund des CS-Fallback-Mechanismus an die NG-Basisstationseinrichtung 105 und/oder an die Wartungseinheit 113 übertragen. Sofern in dem Mobilfunksystem keine Schnittstelle für einen direkten Informationsaustausch zwischen der L-Basisstationseinrichtung 108 und der NG-Basisstationseinrichtung 105 besteht, erfolgt eine Übermittlung der Informationen über das Kernnetz 101, beispielsweise über die Vermittlungseinheit 111 und die Steuerungseinheit 107 über die zwischen diesen Einheiten vorgesehene Schnittstelle. Bei Vorhandensein einer Schnittstelle zwischen der L-Basisstationseinrichtung 108 und der NG-Basisstationseinrichtung 105 können die Informationen über diese Schnittstelle gesendet werden. Für die Übermittlung der Informationen können bereits bestehende Prozeduren genutzt werden. Es kann vorgesehen sein, dass die Übermittlung in einem gesonderten Prozess erfolgt, der speziell zur Übermittlung der Informationen durchgeführt wird. Gleichfalls kann vorgesehen sein, dass die Übermittlung der Informationen innerhalb eine Kommunikationsprozesses zwischen den Basisstationseinrichtungen 105, 108 erfolgt, der aufgrund eines weiteren Anlasses durchgeführt wird. Ein Beispiel für einen solchen Kommunikationsprozess ist ein Austausch von Informationen zur Durchführung des Handovers eines Endgeräts 104 von der NG-Basisstationseinrichtung 105 zu der L-Basisstationseinrichtung 108 oder umgekehrt. An die Wartungseinheit 113 können die Informationen von der L-Basisstationseinrichtung 108 in einer Ausgestaltung über eine entsprechende Verbindung direkt gesendet werden. In einer weiteren Ausgestaltung erfolgt die Übermittlung über das Kernnetz 101. Die Übermittlung der Informationen kann beispielsweise regelmäßig mit vorgebbaren Zeitabständen erfolgen.

Die von einer L-Basisstationseinrichtung 108 in einem Beobachtungszeitraum registrierten Informationen über den Erfolg von Wechseln in das L-Funknetz 103 aufgrund des CS Fallback-Mechanismus und die in demselben Beobachtungszeitrum in der NG-Basisstationseinrichtung 105 registrierten Informationen über Wechselversuche in das L-Funknetz 103 werden in der NG-Basisstationseinrichtung 105 und/oder in der Wartungseinheit 113 ausgewertet. Bei einer Auswertung in der Wartungseinheit 113 übermittelt die NG-Basisstationseinrichtung 105 Informationen über die registrierten Wechselversuche direkt über eine entsprechende Schnittstelle oder über das Kernnetz 101 an die Wartungseinheit 113. In Abhängigkeit von den Ergebnissen der Auswertung können in der NG-Basisstationseinrichtung 108 verwendete Netzparameter von der NG-Basisstationseinrichtung 108 selbst und/oder von der Wartungseinheit 113 angepasst werden.

In einer Ausführungsform wird anhand der für eine Funkzelle des L-Funknetzes 103 registrierten erfolgreichen Anmeldungen im Rahmen des CS Fallback-Mechanismus und anhand der für diese Funkzelle in der NG-Basisstationseinrichtung 105 registrierten Wechselversuche, die im Rahmen des CS Fallback-Mechanismus durchgeführt werden, eine Erfolgs- bzw. Fehlerstatistik ermittelt. Insbesondere kann eine Fehlerquote bestimmt werden, welche den Anteil der fehlgeschlagenen Wechselversuche angibt. Als fehlgeschlagen können Wechselversuche angesehen werden, die nicht zu einer erfolgreichen Anmeldung des Endgeräts in dem zuvor genannten Sinne geführt haben. Die Ermittlung der Fehlerstatistik bzw. der Fehlerquote kann in der Fehlerquote kann in der NG-Basisstationseinrichtung 108 und/oder in dem Wartungssystem 113 vorgenommen werden.

Anhand der Fehlerquote können insbesondere Netzparameter der NG-Basisstationseinrichtung ermittelt bzw. angepasst werden, welche Einfluss auf die Auswahl der Zielzelle haben, in die Endgeräte 104 im Rahmen des CS Fallback-Mechanismus wechseln sollen. Die Anpassung erfolgt vorzugsweise derart, dass bei einer hohen Fehlerquote für eine Funkzelle des L-Funknetzes 103, insbesondere wenn die Fehlerquote einen vorgegebenen Schwellenwert überschreitet, diese Zelle seltener als Zielzelle für CS Fallbackwechsel herangezogen wird oder bei der Auswahl einer Zielzelle unberücksichtigt bleibt.

Wie im Folgenden noch genauer erläutert wird, ist in einer Ausgestaltung vorgesehen sein, dass die NG-Basisstationseinrichtung 105 die Zielzelle für einen Wechsel in das L-Funknetz 103 im Rahmen des CS Fallback-Mechanismus anhand von Messdaten über die Empfangsqualität der Funksignale der verfügbaren Funkzellen des L-Funknetzes 103 auswählt. Die Messdaten werden hierzu auf Anforderung der NG-Basisstationseinrichtung 105 von dem Endgerät 104 erfasst und an die NG-Basisstationseinrichtung 105 übermittelt. Anhand der Fehlerquote für Wechsel in die jeweilige Funkzelle kann beispielsweise ein Schwellwert für die Empfangsqualität bestimmt werden, der überschritten werden muss, damit die Zielzelle von der NG-Basisstationseinrichtung 105 auswählbar ist. Der Schwellwert wird vorzugsweise von der Wartungseinheit 113 ermittelt und an die NG-Basisstationseinrichtung 105 übertragen. Die Ermittlung des Schwellwerts erfolgt unter Berücksichtigung der ermittelten Fehlerquote vorzugsweise derart, dass eine Erhöhung der Fehlerquote zu einer Erhöhung des Schwellwerts führt, so dass eine Zielzelle, für die eine hohe Fehlerquote ermittelt worden ist, nur dann für den CS Fallback-Mechanismus berücksichtigt wird, wenn sie eine hohe Signalqualität bietet.

Die Erfindung ist auf die zuvor beschriebenen Anpassungen von Netzparameter nicht beschränkt. Grundsätzlich können in Abhängigkeit von den in der L-Basisstationseinrichtung 108 registrierten Zugriffen aufgrund von Wechseln im Rahmen des CS-Fallback-Mechanismus sowie den zugehörigen Erfolgsindikatoren und ggf. zusätzlich in Abhängigkeit von den in der NG-Basisstationseinrichtung 105 registrierten Wechselversuchen beliebige Anpassungen von der NG-Basisstationseinrichtung 105 und/oder dem Wartungssystem vorgenommen werden.

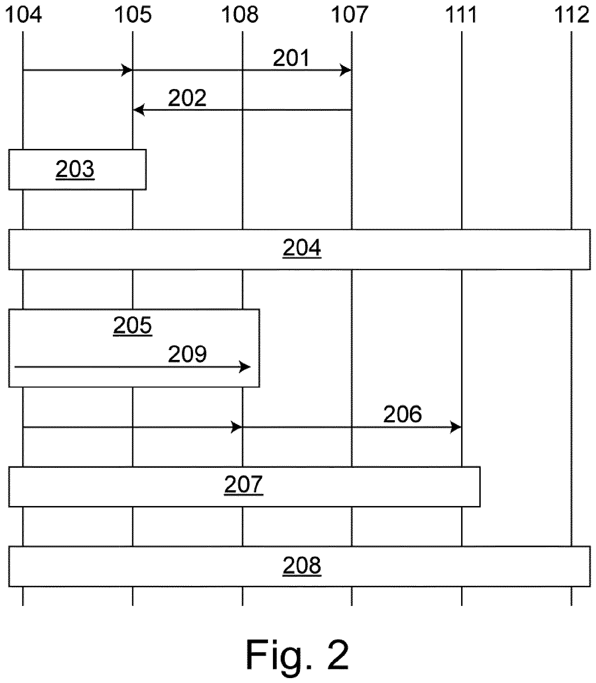

Figur 2 zeigt beispielhaft Schritte für Durchführungen des Wechsels eines Endgeräts 104 zur Durchführung eines Sprachanrufs aufgrund eines CS Fallback-Mechanismus in einer beispielhaften Ausgestaltung. Die Schritte werden zur Durchführung eines abgehenden (MO) Anrufs durchgeführt, der endgeräteseitig initiiert wird. Beispielsweise erfolgt die Initiierung durch den Nutzer des Endgeräts 104, wenn dieser den Aufbau eines Sprachanrufs zu einer von ihm gewählten Gegenstelle durch eine entsprechende Bedienung des Endgeräts 104 veranlasst.

Nach der Initiierung des Sprachanrufs in dem Endgerät 104 sendet das Endgerät 104 eine Anforderung für den Aufbau eines Sprachanrufs unter Verwendung des CS Fallback-Mechanismus über die NG-Basisstationseinrichtung 105 an die Steuerungseinheit 107 (Schritt 201). Die Steuerungseinheit 107 informiert daraufhin die NG-Basisstationseinrichtung 105 in dem Schritt 202 über die Anforderung. Die an die NG-Basisstationseinrichtung 105 gesendete Information enthält insbesondere eine Angabe darüber, dass der Anruf unter Verwendung des CS Fallback-Mechanismus aufgebaut werden soll. Die NG-Basisstationseinrichtung 105 wird hierdurch insbesondere darüber in Kenntnis gesetzt, dass das Endgerät 104 in das L-Funknetz 103 wechseln soll.

Nach Erhalt der von der Steuerungseinheit 107 in dem Schritt 202 gesendeten Information bestimmt die NG-Basisstationseinrichtung 105 in einer Ausgestaltung die Zielzelle des L-Funknetzes 103, in welche das Endgerät 104 wechseln soll, und teilt dem Endgerät 104 die Zielzelle mit. Ferner fordert die NG-Basisstationseinrichtung 105 das Endgerät 104 zur Durchführung des Wechsels in die ausgewählte Zielzelle des L-Funknetzes 103 auf.

Die Zielzelle kann in der NG-Basisstationseinrichtung 105 fest vorgegebenen sein. Wie zuvor bereits erwähnt, kann es alternativ vorgesehen sein, dass die NG-Basisstationseinrichtung 105 das Endgerät 104 dazu auffordert, Messdaten über die Empfangsqualität von empfangbaren Signalen von Zellen des L-Funknetzes 103 zu erfassen und an die NG-Basisstationseinrichtung 105 zurückzumelden. Die Messdaten können beispielsweise die Signalstärken der empfangbaren Signale beinhalten. Anhand der Messdaten wählt die NG-Basisstationseinrichtung 105 sodann eine Zielzelle in dem L-Funknetz 103 aus. Hierbei kann in einer Ausführungsform aus allen verfügbaren Zellen des L-Funknetzes 103 diejenige mit der besten Empfangsqualität ausgewählt werden. In einer weiteren Ausgestaltung kann vorgesehen sein, dass für die Auswahl nur die verfügbaren Zellen berücksichtigt werden, für die eine Empfangsqualität ermittelt wird, die einen vorgegebenen Schwellwert überschreitet. Wie zuvor bereits beschrieben, kann der Schwellwert anhand der ermittelten Fehlerquoten für im Rahmen des CS Fallback-Mechanismus durchgeführte Wechsel angepasst werden, so dass Zielzellen mit einer hohen Fehlerquote nicht oder nur bei besonders hoher Empfangsqualität berücksichtigt werden.

Eine weitere Ausgestaltung sieht vor, dass das L-Funknetz 103 nicht von der NG-Basisstationseinrichtung 105, sondern von dem Endgerät 104 selbst ausgewählt wird. In dieser Ausgestaltung fordert die NG-Basisstationseinrichtung 105 das Endgerät 104 in dem Schritt 203 dazu auf, in das L-Funknetz 103 zu wechseln. Daraufhin nimmt das Endgerät 104 die Auswahl der Zielzelle des L-Funknetzes 103 beispielsweise in Abhängigkeit von Messdaten über die Empfangsqualität von empfangbaren Signalen der verfügbaren Zellen des L-Funknetzes selbst vor.

In allen zuvor genannten Ausgestaltungen wird die von der NG-Basisstationseinrichtung 105 gesendete Aufforderung zur Durchführung des Wechsels in das L-Funknetz 103 vorzugsweise als ein Wechselversuch in der NG-Basisstationseinrichtung 105 registriert.

Wenn die Auswahl der Zielzelle des L-Funknetzes 103 durch die NG-Basisstationseinrichtung 105 vorgenommen wird und das Mobilfunksystem dies unterstützt, kann optional eine bestehende Datenverbindung des Endgeräts 104 über das NG-Funknetz 102 und die NG-Gatewayeinheit 112 mit Unterstützung der Steuerungseinheit 107 im Rahmen eines so genannten PS Handover in einer dem Fachmann an sich bekannten Art und Weise auf das L-Funknetz 103 und die diesem zugeordnete L-Gatewayeinheit 112 umgeschaltet werden, so dass zusätzlich zu leitungsvermittelten Verbindung, die für das Endgerät 104 über das L-Funknetz 103 aufgebaut wird, eine paketvermittelte Datenverbindung des Endgeräts 104 erhalten bleibt. Sofern dies vorgesehen ist, können nach der Auswahl der Zielzelle in dem Schritt 204 Schritte zur Vorbereitung des PS Handover vorgenommen werden.

Nachdem das Endgerät 104 in dem Schritt 203 die Aufforderung zum Wechsel in das L-Funknetz 103 erhalten hat, meldet es sich in dem Schritt 205 in der von der NG-Basisstationseinrichtung 105 oder selbst ermittelten Zielzelle an der zugehörigen L-Basisstationseinrichtung 108 an. Im Rahmen des Anmeldungsvorgangs wird unter anderem eine Signalisierungsverbindung zu dem Endgerät 104 aufgebaut, die nachfolgend für den Austausch von Signalisierungsnachrichten mit dem Endgerät 104 verwendet wird. Der Aufbau der Signalisierungsverbindung erfolgt in einer Ausgestaltung aufgrund einer Anforderung, die von dem Endgerät 104 an die L-Basisstationseinrichtung 108 gesendet wird. Die Aufforderung kann insbesondere in einer RRC Connection Request-Nachricht enthalten sein.

Nach dem Aufbau der Signalisierungsverbindung fordert das Gerät 104 den Aufbau des gewünschten Sprachanrufs an. Hierzu wird in dem Schritt 206 eine entsprechende Anforderungsnachricht von dem Endgerät 104 über die L-Basisstationseinrichtung 108 an die Vermittlungseinheit 111 gesendet. Sodann wird in dem Schritt 207 der Sprachanruf über eine leitungsvermittelte Verbindung über die Vermittlungseinheit 111 wie von dem Endgerät 104 angefordert aufgebaut. Zudem kann der PS Handover abgeschlossen werden, sofern seine Durchführung vorgesehen ist (Schritt 208).

Die Information, dass der Wechsel des Endgeräts 104 aufgrund eines CS Fallback erfolgt, wird von dem Endgerät 104 innerhalb des Anmeldungsprozesses an der L-Basisstationseinrichtung 108 oder in einer nach dem Anmeldungsprozess gesendeten Nachricht an die L-Basisstationseinrichtung 108 gemeldet. Vorzugsweise wird die Information in eine von dem Endgerät 104 an die L-Basisstationseinrichtung 108 gesendete Nachricht integriert. In der Figur 2 ist beispielhaft anhand des Schritts 209 die Übermittlung einer solchen Nachricht während der Anmeldung an der L-Basisstationseinrichtung 108 veranschaulicht. Die Information kann als ein Flag ausgestaltet sein, welches innerhalb der vorgesehenen Nachricht gesetzt wird, wenn der Wechsel aufgrund des CS Fallback-Mechanismus durchgeführt wird, und ansonsten ungesetzt bleibt bzw. nicht vorhanden ist. In einer Ausgestaltung ist vorgesehen, dass die Information in die Anforderung zum Aufbau der Signalisierungsverbindung integriert wird. Im Fall eines Wechsels in ein 3G-Netz handelt es sich hierbei beispielsweise um die RRC Connection Request-Nachricht. In einer Ausgestaltung kann die Information als ein sogenannter "Cause Value" eines im Hinblick auf den CS Fallback-Mechanismus eingerichteten "Cause Value"-Typs in eine Nachricht an die L-Basisstationseinrichtung 108 integriert werden. Dieser Typ kann andere ggf. in der Nachricht vorgesehene Typen ergänzen.

Aufgrund des Erhalts der zuvor beschriebenen Information wird die Anmeldung des Endgeräts 104 von der L-Basisstationseinrichtung 108 als eine Anmeldung im Rahmen des CS-Fallback-Mechanismus zusammen mit dem für die Anmeldung ermittelten Erfolgsindikator registriert. Der Erfolgsindikator für den Erfolgsfall wird in einer Ausgestaltung dann von der L-Basisstationseinrichtung 108 gesetzt, wenn diese den erfolgreichen Rufaufbau in dem Schritt 207 festgestellt hat. Scheitert die Anmeldung vorher, wird der Erfolgsindikator für den Fehlerfall gesetzt. Sofern ein PS Handover durchgeführt wird, kann beispielsweise gleichfalls vorgesehen sein, dass der Erfolgsindikator des Erfolgsfalls nur dann gesetzt wird, wenn der Rufaufbau in dem Schritt 207 erfolgreich war und der PS Handover in dem Schritt 208 erfolgreich abgeschlossen wurde.

Informationen über die registrierten Anmeldungen, die im Rahmen des CS Fallback-Mechanismus erfolgt sind, werden in der oben bereits erläuterten Weise von der L-Basisstationseinrichtung 108 an die NG-Basisstationseinrichtung 105 und/oder die Wartungseinheit 113 gesendet.

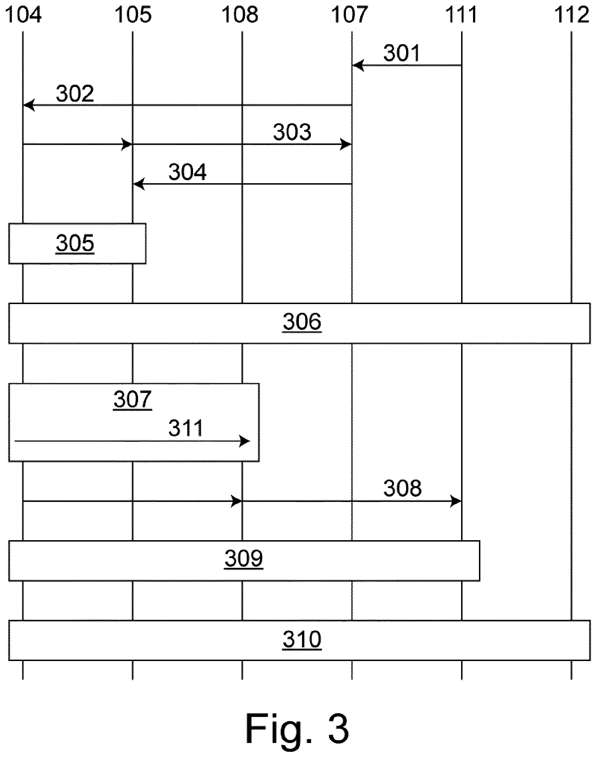

Figur 3 zeigt beispielhaft Schritte für die Durchführung eines eingehenden (MT) Anrufs, bei dem das Endgerät 104 im Rahmen des CS Fallback-Mechanismus von dem NG-Funknetz 102 in das L-Funknetz 103 wechselt, um den Anruf anzunehmen und aufzubauen.

Der eingehende Anruf wird zunächst an die dem L-Funknetz 103 zugeordnete Vermittlungseinheit 111 signalisiert. Diese meldet den eingehenden Anruf daraufhin in dem Schritt 301 der dem NG-Funknetz 102 zugeordnete Steuerungseinheit 107. Sofern für das Endgerät 104 keine Datenverbindung über das NG-Funknetz 102 und die NG-Gatewayeinheit 106 aktiv ist, sendet die Steuerungseinheit 107 über das NG-Funknetz 102 in dem Schritt 302 einen speziellen Paging-Ruf, welcher den Anruf sowie den zur Annahme erforderlichen Wechsel in das L-Funknetz 103 signalisiert (CS Paging), innerhalb eines im Kernnetz 101 registrierten Aufenthaltsbereichs des Endgeräts 104 in dem NG-Funknetz 102. Falls eine aktive Datenverbindung für das Endgerät 104 besteht, wird anstelle des Paging-Rufs in dem Schritt 302 eine Benachrichtigung von der Steuerungseinheit 107 an das Endgerät 104 gesendet, die das Endgerät 104 über den Anruf und den zu seiner Annahme erforderlichen Wechsel in das L-Funknetz 103 informiert. Das Endgerät 104 antwortet auf den Paging-Ruf oder den Benachrichtigung in dem Schritt 303 mit einer Nachricht an die Steuerungseinheit 107, in der es den Sprachanruf akzeptiert und einen Wechsel in das L-Funknetz 103 im Rahmen des CS Fallback-Mechanismus anfordert.

In dem Schritt 304 informiert die Steuerungseinheit 107 die NG-Basisstationseinrichtung 105, über die das Endgerät 104 mit dem NG-Funknetz 102 verbunden ist, darüber, dass das Endgerät 104 im Rahmen des CS Fallback-Mechanismus in das L-Funknetz 103 wechseln soll. Dieser Schritt entspricht dem zuvor beschriebenen Schritt 202 der Figur 2. Aufgrund der Übermittlung der Aufforderung zur Durchführung des Wechsels an das Endgerät 104 registriert die NG-Basisstationseinrichtung 105 zudem einen Wechselversuch im Rahmen des CS Fallback-Mechanismus in das L-Funknetz 103 bzw. in die ausgewählte Zielzelle. Nachfolgend wird das Endgerät 104 in dem Schritt 305 aufgefordert, den Wechsel in das L-Funknetz 103 vorzunehmen, und die Zielzelle des Endfunknetzes wird ermittelt. Dies geschieht in gleicher Weise wie zuvor im Zusammenhang mit dem Schritt 203 der Figur 2 erläutert. In dem Schritt 306 kann in gleicher Weise wie in dem Schritt 204 der Figur 2 optional ein PS Handover zum Umschalten einer aktiven Datenverbindung des Endgeräts 104 durchgeführt werden. In dem Schritt 307 meldet sich das Endgerät 104 in der ausgewählten Zielzelle des L-Funknetzes 103 an der zugehörigen L-Basisstationseinrichtung 108 an, und es wird eine Signalisierungsverbindung zu dem Endgerät 104 aufgebaut. Dies geschieht so, wie zuvor im Zusammenhang mit dem Schritt 205 der Figur 5 erläutert.

Nach dem Aufbau der Signalisierungsverbindung in dem Schritt 307 sendet das Endgerät 104 eine Meldung über die L-Basisstationseinrichtung 108 an die Vermittlungseinheit 111, mit der es der Vermittlungseinheit 111 signalisiert, dass es bereit ist, den wartenden Anruf entgegenzunehmen. Daraufhin wird in dem Schritt 309 über eine leitungsvermittelte Verbindung zu dem Endgerät 104 der Sprachanruf aufgebaut. In einem weiteren Schritt 310 kann zudem ein gegebenenfalls durchgeführtes PS Handover abgeschlossen werden, um die gegebenenfalls bestehende Datenverbindung des Endgeräts 104 auf das L-Funknetz 103 und die ihm zugeordnete L-Gatewayeinheit 112 umzuschalten.

In gleicher Weise wie zuvor in Bezug auf Figur 2 beschrieben, informiert das Endgerät 104 die L-Basisstationseinrichtung 108, welche die Zielzelle des Endgeräts 104 versorgt, darüber, dass der Wechsel in das L-Funknetz 103 im Rahmen des CS Fallback-Mechanismus durchgeführt worden ist. Wie zuvor beschrieben, erfolgt dies in einer Implementierung innerhalb des Anmeldungsprozesses an der L-Basisstationseinrichtung 108, etwa mittels einer Information, die in die Anforderung zum Aufbau der Signalisierungsverbindung integriert wird. Beispielhaft ist die Übermittlung der Information während des Anmeldeprozesses in der Figur 3 anhand des in den Schritt 307 integrierten Schritts 311 dargestellt.

Von der L-Basisstationseinrichtung 108 wird die Anmeldung aufgrund des Erhalts der Information als ein Wechsel im Rahmen des CS-Fallback-Mechanismus zusammen mit dem für die Anmeldung ermittelten Erfolgsindikator registriert. Der Erfolgsindikator für den Erfolgsfall wird analog zur dem zuvor beschriebenen abgehenden Anruf in einer Ausgestaltung dann von der L-Basisstationseinrichtung 108 gesetzt, wenn diese den erfolgreichen Rufaufbau in dem Schritt 309 festgestellt hat. Scheitert die Anmeldung vorher, wird der Erfolgsindikator für den Fehlerfall gesetzt. Sofern eine PS Handover vorgesehen ist, kann jedoch beispielsweise auch bei eingehenden Anrufen vorgesehen sein, dass der Erfolgsindikator des Erfolgsfalls nur dann gesetzt wird, wenn der Rufaufbau in dem Schritt 309 erfolgreich war und der PS Handover in dem Schritt 310 erfolgreich abgeschlossen wurde.

Die Informationen über die registrierten Wechsel im Rahmen des CS Fallback-Mechanismus werden wie zuvor beschrieben von der L-Basisstationseinrichtung 108 an die NG-Basisstationseinrichtung 105 und/oder die Wartungseinheit 113 gesendet.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Erfindung nicht auf die erläuterten Ausführungsbeispiele beschränkt. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichen

- 101: Kern netz
- 102: NG-Funknetz
- 103: L-Funknetz
- 104: (Mobilfunk-)Endgerät
- 105: NG-Basisstationseinrichtung
- 106: NG-Gatewayeinheit
- 107: Steuerungseinheit
- 108: L-Basisstationseinrichtung
- 109: Funkeinheit
- 110: Funknetz-Steuerungseinheit
- 111: Vermittlungseinheit
- 112: L-Gatewayeinheit
- 113: Wartungseinheit

- 201-209: Schritte
- 301-311: Schritte

## Patentansprüche

1. Verfahren zum Wechsel eines Mobilfunkendgeräts von einem ersten Funknetz eines Mobilfunksystems in ein zweites Funknetz, wobei der Wechsel aufgrund eines CS Fallback-Mechanismus durchgeführt wird, und wobei das Mobilfunkendgerät sich aufgrund des Wechsels an einer Basisstationseinrichtung des zweiten Funknetzes anmeldet, um eine Verbindung aufzubauen, wobei das Mobilfunkendgerät im Zusammenhang mit der Anmeldung einen Hinweis auf den CS-Fallback-Mechanismus an die Basisstationseinrichtung des zweiten Funknetzes übermittelt **dadurch gekennzeichnet, dass** die Basisstationseinrichtung die Anmeldung des Endgeräts in Abhängigkeit von dem Hinweis registriert, wobei in einem Optimierungsschritt wenigstens ein Netzparameter des ersten und/oder des zweiten Funknetzes in Abhängigkeit von den in der Basisstationseinrichtung des ersten und/oder des zweiten Funknetzes für eine Mehrzahl von Funknetzwechseln registrierten Informationen über Funknetzwechsel im Rahmen des CS Fallback-Mechanismus angepasst wird, und wobei anhand in der Basisstationseinrichtung des zweiten Funknetzes registrierter Anmeldung und zugehöriger Erfolgsindikatoren und anhand in der Basisstationseinrichtung des ersten Funknetzes registrierter Wechselversuche eine Fehlerquote ermittelt wird, nach deren Maßgabe wenigstens der Netzparameter in dem Optimierungsschritt angepasst wird.

2. Verfahren nach einem der vorangegangenen Ansprüche, wobei geprüft wird, ob die Anmeldung des Endgeräts an der Basisstationseinrichtung des zweiten Funknetzes erfolgreich ist, und die Registrierung der Anmeldung des Endgeräts zusammen mit einem Erfolgsindikator vorgenommen wird, der in Abhängigkeit mit von einem Ergebnis der Prüfung bestimmt wird.

3. Verfahren nach einem der vorangegangenen Ansprüche, wobei das Endgerät von einer Basisstationseinrichtung des ersten Funknetzes zur Durchführung des Wechsels aufgefordert wird und die Basisstationseinrichtung des ersten Funknetzes aufgrund der Aufforderung einen im Rahmen des CS Fallback-Mechanismus durchgeführten Wechselversuch registriert.

4. Verfahren nach einem der vorangegangen Ansprüche, wobei in der Basisstationseinrichtung des zweiten Funknetzes die Anmeldung des Endgeräts und/oder in der Basisstationseinrichtung des ersten Funknetzes der Wechselversuch in Bezug auf eine bestimmte von der Basisstationseinrichtung des zweiten Funknetzes versorgte Funkzelle des zweiten Funknetzes registriert werden.

5. Verfahren nach Anspruch 1, wobei Informationen über die in der Basisstationseinrichtung des zweiten Funknetzes registrierten Anmeldungen und/oder die zugehörigen Erfolgsindikatoren von der Basisstationseinrichtung des zweiten Funknetzes an die Basisstationseinrichtung des ersten Funknetzes übermittelt werden und wobei der Optimierungsschritt in der Basisstationseinrichtung des ersten Funknetzes ausgeführt wird.

6. Verfahren nach Anspruch 1, wobei Informationen über die in der Basisstationseinrichtung des zweiten Funknetzes registrierten Anmeldungen und/oder die zugehörigen Erfolgsindikatoren von der Basisstationseinrichtung an eine Wartungseinheit des Mobilfunksystems übermittelt werden und wobei der Optimierungsschritt in der Wartungseinheit ausgeführt wird.

7. Verfahren nach einem der vorangegangenen Ansprüche, wobei der Hinweis auf den CS Fallback-Mechanismus innerhalb einer Anforderung für den Aufbau einer Signalisierungsverbindung von dem Mobilfunkendgerät an die Basisstationseinrichtung des zweiten Funknetzes übermittelt wird.

## Claims

1. A method for switching over a mobile terminal device from a first radio network of a mobile radio system to a second radio network, whereby the switchover is carried out on the basis of a CS fallback mechanism, and whereby, on the basis of the switchover, the mobile terminal device logs on to a base station of the second radio network in order to establish a connection, whereby, in conjunction with the log-on, the mobile terminal device transmits a notification to the base station of the second radio network station indicating the CS fallback mechanism, **characterized in that** the base station registers the log-on of the terminal device as a function of the notification, whereby, in an optimization step, at least one network parameter of the first and/or second radio network is modified as a function of the information about radio network switchovers within the scope of the CS fallback mechanism, and this information is registered in the base station of the first and/or second radio network for a plurality of radio network switchovers, and whereby a failure rate is ascertained on the basis of a log-on that has been registered in the base station of the second radio network and on the basis of associated outcome indicators as well as on the basis of switchover attempts registered in the base station of the first radio network, and according to this failure rate, at least the network parameter is modified in the optimization step.

2. The method according to one of the preceding claims, whereby a checking procedure is carried out to ascertain whether the log-on of the terminal device to the base station of the second radio network is successful, and the log-on of the terminal device is registered, together with an outcome indicator that is determined as a function of the result of the checking procedure.

3. The method according to one of the preceding claims, whereby a base station of the first radio network prompts the terminal device to carry out the switchover and, on the basis of the prompt, the base station of the first radio network registers a switchover attempt that has been made within the scope of the CS fallback mechanism.

4. The method according to one of the preceding claims, whereby the log-on of the terminal device is registered in the base station of the second radio network and/or the switchover attempt is registered in the base station of the first radio network pertaining to a specific radio cell of the second radio network that receives its feed from the base station of the second radio network.

5. The method according to claim 1, whereby information about the log-ons registered in the base station of the second radio network and/or the associated outcome indicators are transmitted from the base station of the second radio network to the base station of the first radio network, and whereby the optimization step is carried out in the base station of the first radio network.

6. The method according to claim 1, whereby information about the log-ons registered in the base station of the second radio network and/or the associated outcome indicators are transmitted from the base station to a maintenance unit of the mobile radio network, and whereby the optimization step is carried out in the maintenance unit.

7. The method according to one of the preceding claims, whereby, in a request to establish a signaling connection, the notification pertaining to the CS fallback mechanism is transmitted from the mobile terminal device to the base station of the second radio network.

## Revendications

1. Procédé de passage d'un terminal radio mobile d'un premier réseau radio d'un système radio mobile à un deuxième réseau radio, le passage étant exécuté en raison d'une procédure de rechange à commutation par circuit et le terminal radio mobile se connectant, en raison du passage, à un dispositif de station de base du deuxième réseau radio afin d'établir une liaison, le terminal radio mobile transmettant, en rapport avec la connexion, une information relative à la procédure de rechange à commutation par circuit au dispositif de station de base du deuxième réseau radio, **caractérisé en ce que** le dispositif de station de base enregistre la connexion du terminal en fonction de l'information, au moins un paramètre réseau du premier et/ou du deuxième réseau radio étant adapté, dans une étape d'optimisation, en fonction des informations sur le changement de réseau radio enregistrées dans le dispositif de station de base du premier et/ou du deuxième réseau radio pour une pluralité de changements de réseau radio dans le cadre de la procédure de rechange à commutation par circuit et un taux d'erreur en fonction duquel au moins le paramètre réseau est adapté dans l'étape d'optimisation étant déterminé sur la base de la connexion enregistrée dans le dispositif de station de base du deuxième réseau radio et d'indicateurs de succès associés et sur la base des tentatives de changement enregistrées dans le dispositif de station de base du premier réseau radio.

2. Procédé selon l'une des revendications précédentes, selon lequel il est examiné si la connexion du terminal au dispositif de station de base du deuxième réseau radio a réussi et l'enregistrement de la connexion du terminal est effectué avec un indicateur de succès qui est déterminé en fonction d'un résultat de l'examen.

3. Procédé selon l'une des revendications précédentes, le terminal étant invité par un dispositif de station de base du premier réseau radio à procéder au changement et le dispositif de station de base du premier réseau radio enregistrant, sur la base de l'invitation, une tentative de changement effectuée dans le cadre de la procédure de rechange à commutation par circuit.

4. Procédé selon l'une des revendications précédentes, la connexion du terminal, dans le dispositif de station de base du deuxième réseau radio, et/ou la tentative de changement, dans le dispositif de station de base du premier réseau radio, étant enregistrées par rapport à une cellule radio déterminée du deuxième réseau radio qui est alimentée par le dispositif de station de base du deuxième réseau radio.

5. Procédé selon la revendication 1, des informations sur les connexions enregistrées dans le dispositif de station de base du deuxième réseau radio et/ou les indicateurs de succès associés étant transmis par le dispositif de station de base du deuxième réseau radio au dispositif de station de base du premier réseau radio et l'étape d'optimisation étant exécutée dans le dispositif de station de base du premier réseau radio.

6. Procédé selon la revendication 1, des informations sur les connexions enregistrées dans le dispositif de station de base du deuxième réseau radio et/ou les indicateurs de succès associés étant transmis par le dispositif de station de base à une unité de maintenance du système radio mobile et l'étape d'optimisation étant exécutée dans l'unité de maintenance.

7. Procédé selon l'une des revendications précédentes, l'information relative à la procédure de rechange à commutation par circuit étant transmise par le terminal radio mobile au dispositif de station de base du deuxième réseau radio dans une requête d'établissement d'une liaison de signalisation.
